# EUROPEAN PATENT SPECIFICATION

(11) **EP 4 283 820 B1**
(45) Date of publication and mention of the grant of the patent: **26.11.2025**
(21) Application number: 21940044.7
(22) Date of filing: 16.05.2021
(51) Int. Cl.: H04L 69/14, H02J 7/00, H04L 67/12, B60L 53/66, B60L 3/00, B60L 53/65, B60L 53/67, B60L 53/68

(54) **CHARGING CONTROL METHOD AND SYSTEM, AND STORAGE MEDIUM**
LADESTEUERUNGSVERFAHREN UND -SYSTEM SOWIE SPEICHERMEDIUM
PROCÉDÉ ET SYSTÈME DE COMMANDE DE CHARGE, ET SUPPORT D'ENREGISTREMENT

(43) Date of publication of application: 29.11.2023
(73) Proprietor: Zhejiang Geely Holding Group Co., Ltd., Hangzhou City, Zhejiang 310051 (CN); Geely Automobile Research Institute (Ningbo) Co., Ltd., Ningbo, Zhejiang 315336 (CN)
(72) Inventor: JIANG, Daiping, Hangzhou Bay New District Ningbo, Zhejiang 315336 (CN); GE, Binbin, Hangzhou Bay New District Ningbo, Zhejiang 315336 (CN); ZHANG, Ruifeng, Hangzhou Bay New District Ningbo, Zhejiang 315336 (CN); ZHAO, Yue, Hangzhou Bay New District Ningbo, Zhejiang 315336 (CN); HU, Zhen, Hangzhou Bay New District Ningbo, Zhejiang 315336 (CN); YU, Guangmu, Hangzhou Bay New District Ningbo, Zhejiang 315336 (CN); YANG, Guoyi, Hangzhou Bay New District Ningbo, Zhejiang 315336 (CN)
(74) Representative: Range, Christopher William
(86) International application number: PCT/CN2021/093987
(87) International publication number: WO 2022/241585

(56) References cited:
- EP-A1- 2 521 274
- CN-A- 107 231 430
- CN-A- 110 370 976
- CN-A- 111 497 673
- CN-A- 112 428 863
- JP-A- 2013 236 205

## Description

### FIELD

The present disclosure relates to the technical field of charging electric vehicles by charging piles, and in particular, to a charging control method and system, and a storage medium.

### BACKGROUND

With the progress of the times, the number of charging units in a current charging pile system is increasing, and a network structure is becoming more complex. A charging station may have dozens or even hundreds of charging units. A charging function may be jointly achieved by adopting a layered structure and involving multilayered network transmission and conversion.

However, in traditional solutions, a communication fault or a network fault occurring in any charging unit within a transmission link may cause the entire charging system to fail to work. Reliability and robustness of the entire system are both poor, especially in charging systems with a large number of charging units and complex networks. In existing solutions, the charging system is connected to a cloud platform through a single link. When a communication outage occurs between the charging system and the cloud platform, it may also result in the inability to settle charging of the system, leading to charging failures. EP2521274A1 discloses a vehicle includes a wireless communication device, a PLC processing device, and a communication control device. Document CN112428863 discloses a charging system fault positioning method.

### SUMMARY

To solve the existing problems in the related art, an embodiment of the present disclosure provides a charging control method and system, and a storage medium. The technical solution is described below.

One embodiment provides a charging control method, applied in an annular charging control system including a pile cloud platform, a charging pile system, and a vehicle cloud platform interacting with the pile cloud platform through a first communication connection, where the charging pile system includes a plurality of charging units including a first charging unit and a second charging unit. The method includes, in a process of charging the target vehicle by the charging pile system: establishing a communication connection with a target vehicle through the charging pile system, the target vehicle interacts with the vehicle cloud platform through a second communication connection; when a communication fault occurs in the charging pile system, generating, based on charging control information to be transmitted, target route information by the first charging unit where the communication fault occurs, the target route information includes destination address information, and the destination address information is address information corresponding to the second charging unit that receives the charging control information to be transmitted; and transmitting the target route information from the first charging unit to the target vehicle through the pile cloud platform, the first communication connection and the second communication connection, and transmitting by the target vehicle, the target route information to the second charging unit corresponding to the destination address information, thus enabling the second charging unit to complete the charging operation on the target vehicle based on the charging control information in the target route information.

Another embodiment provides an annular charging control system, including: a pile cloud platform; a charging pile system including a plurality of charging units comprising a first charging unit and a second charging unit; a vehicle cloud platform interacting with the pile cloud platform through a first communication connection; a communication connection module configured to establish a communication connection with a target vehicle through the charging pile system in a process of charging the target vehicle by the charging pile system, the target vehicle interacts with the vehicle cloud platform through a second communication connection; a route information determination module configured to, when a communication fault occurs in the charging pile system, generate, based on charging control information to be transmitted, target route information by the first charging unit where the communication fault occurs, the target route information includes destination address information, and the destination address information is address information corresponding to the second charging unit that receives the charging control information to be transmitted; and a charging control module configured to transmit the target route information from the first charging unit to the target vehicle through the pile cloud platform, the first communication connection and the second communication connection, and transmit by the target vehicle, the target route information to the second charging unit corresponding to the destination address information, thus enabling the second charging unit to complete the charging operation on the target vehicle based on the charging control information in the target route information.

Correspondingly, the charging control module further includes: a reverse transmission route module configured to transmit, by the target vehicle, reverse transmission route information of the target route information received by the first charging unit to the first charging unit through the first communication connection and the second communication connection, the reverse route information process is used for performing information interaction.

Correspondingly, the charging pile system includes a plurality of parallel second charging units and a plurality of parallel charging management units; and the process of charging the target vehicle by the charging pile system further includes: a first target route information determination module configured to when one of the plurality of parallel second charging units fails simultaneously with a corresponding first charging unit and a corresponding charging management unit in the charging pile system, generate, by the second charging unit where a communication fault occurs, first target route information based on the charging control information to be transmitted, the first target route information includes the destination address information and fault request information, and the fault request information is address information corresponding to the second charging unit where the communication fault occurs; and a first charging control module configured to transmit, by a normal second charging unit, the first target route information to the target vehicle through the second communication connection and the first communication connection, transmitting, by the target vehicle, the first target route information to a first charging unit corresponding to the destination address information through the plurality of charging management units, and completing, by the first charging unit, the charging operation on the target vehicle based on charging control information in the first target route information.

Correspondingly, the process of charging the target vehicle by the charging pile system further includes: a fault positioning module configured to transmit the first target route information to the pile cloud platform through the target vehicle, the second communication connection, and the first communication connection, and performing fault communication positioning by the pile cloud platform.

Correspondingly, the process of charging the target vehicle by the charging pile system further includes: a second route information determination module configured to generate, by a first charging unit in the charging pile system, second route information based on the charging control information to be transmitted when a communication fault occurs between the charging pile system and the pile cloud platform, the second route information including charging pile charging monitoring information and charging pile charging state information; a charging authorization information module configured to transmit the second route information to the pile cloud platform through the target vehicle, the first communication connection, and the second communication connection, and generating, by the pile cloud platform, charging authorization information based on the second route information; and a second charging control module configured to transmit the charging authorization information to the target vehicle through the first communication connection and the second communication connection, transmitting, by the target vehicle, the charging authorization information to the charging pile system through the plurality of charging management units, and completing the charging operation on the target vehicle by the charging pile system.

The other embodiment provides a storage medium, storing at least one instruction, at least one section of a program, a code set, or an instruction set. The at least one instruction, the at least one section of the program, code set, or instruction set, when loaded and executed by a processor, implement the charging control method as described above.

The present disclosure provides a charging control method and system, and a storage medium, which have the following technical effects.

According to embodiments of the present disclosure, by establishing the communication connection with the target vehicle through the charging management unit in the charging pile system, when the communication fault occurs in the charging pile system, the target route information is generated by the first charging unit where the communication fault occurs based on the charging control information to be transmitted. The target route information includes the destination address information, and the destination address information is the address information corresponding to the second charging unit that receives the charging control information to be transmitted. The target route information is transmitted to the target vehicle through the first communication connection and the second communication connection, and is transmitted by the target vehicle to the second charging unit corresponding to the destination address information, enabling the second charging unit to complete the charging operation on the target vehicle based on the charging control information in the target route information. According to the technical solution, when the communication fault occurs in the charging unit, the charging process of the vehicle may also be completed. Moreover, it is possible to improve reliability and robustness of the charging system and accurate positioning of the fault point.

### BRIEF DESCRIPTION OF THE DRAWINGS

In order to clearly explain technical solutions of the embodiments of the present disclosure or in the related art, accompanying drawings used in the description of the embodiments or the related art are briefly described below. Obviously, the accompanying drawings as described below are merely some embodiments of the present disclosure. Based on structures illustrated in these drawings, other accompanying drawings may be obtained by those of ordinary skill in the art without creative effort.
FIG. 1 is a diagram illustrating an application environment of a charging control method according to an embodiment of the present disclosure.
FIG. 2 is a schematic flowchart of a charging control method according to an embodiment of the present disclosure.
FIG. 3 is a schematic diagram of an information flow during normal operation of a charging pile according to an embodiment of the present disclosure.
FIG. 4 is a schematic diagram of an information flow when a communication fault occurs between a power management unit and a charging management unit in a charging pile system according to an embodiment of the present disclosure.
FIG. 5 is a schematic diagram of a communication information flow when a power management unit (PMU-A) fails simultaneously with a station monitoring unit and a charging management unit according to an embodiment of the present disclosure.
FIG. 6 is a schematic diagram of an information flow when a communication fault occurs between a pile cloud platform and a charging pile system according to an embodiment of the present disclosure.
FIG. 7 is a schematic diagram of a charging control system according to an embodiment of the present disclosure.

### DETAILED DESCRIPTION

Technical solutions according to embodiments of the present disclosure will be clearly and completely described below in combination with accompanying drawings of the embodiments of the present disclosure. Obviously, the embodiments described below are only a part, rather than all, of the embodiments of the present disclosure. On a basis of the embodiments in the present disclosure, all other embodiments obtained by those of ordinary skill in the art without creative labor shall fall within the scope of the present disclosure.

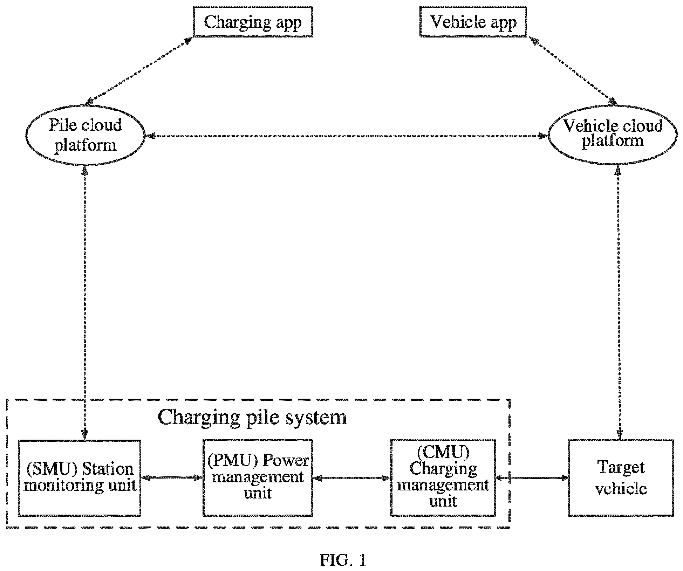

FIG. 1 is an application environment of a charging control method according to an embodiment of the present disclosure. The application environment is specifically applied in an Internet of Vehicles system for charging a vehicle by a charging pile. The system mainly includes a pile cloud platform, a charging pile system, a vehicle cloud platform, which form an annular charging network together with the vehicle. The pile cloud platform is connected to a charging APP, and data information received by the pile cloud platform is displayed by the charging APP. The vehicle cloud platform is connected to a vehicle APP, and data information received by the vehicle cloud platform is displayed by the vehicle APP.

The charging control method provided by the embodiments of the present disclosure will be described in detail below with reference to the application environment illustrated in FIG. 1.

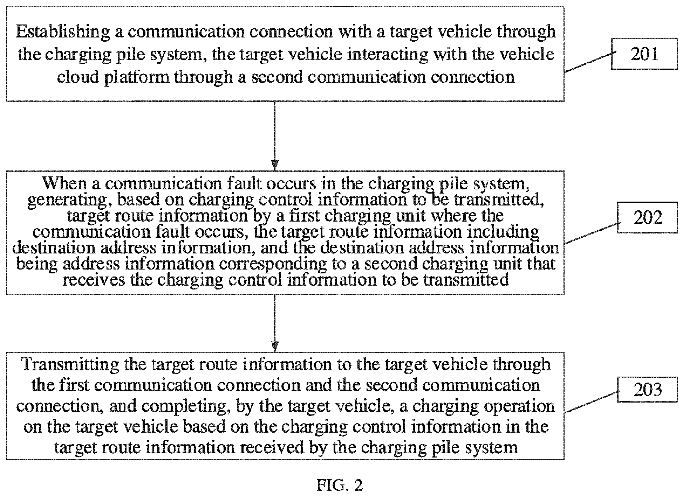

FIG. 2 is a schematic flowchart of a charging control method according to an embodiment of the present disclosure. In some embodiments, as illustrated in FIG. 2, the method is applied in a charging control system. The charging control system includes a pile cloud platform, a charging pile system, and a vehicle cloud platform interacting with the pile cloud platform through a first communication connection. The method specifically includes actions in blocks S201 to S203 in a process of charging the target vehicle by the charging pile system.

At block S201, a communication connection is established with a target vehicle through a charging management unit in the charging pile system. The target vehicle interacts with the vehicle cloud platform through a second communication connection.

At block S202, when a communication fault occurs in the charging pile system, target route information is generated by a first charging unit where the communication fault occurs based on charging control information to be transmitted. The target route information includes destination address information, and the destination address information is address information corresponding to a second charging unit that receives the charging control information to be transmitted.

At block S203, the target route information is transmitted to the target vehicle through the first communication connection and the second communication connection, and a charging operation is completed by the target vehicle on the target vehicle based on the charging control information in the target route information received by the charging pile system.

Further, the action of transmitting the target route information to the target vehicle through the first communication connection and the second communication connection further includes: transmitting, by the target vehicle, reverse transmission route information of the target route information received by the first charging unit to the first charging unit through the first communication connection and the second communication connection. The reverse route information process is used for performing information interaction.

Further, the charging pile system includes a plurality of parallel second charging units and a plurality of parallel charging management units; and the process of charging the target vehicle by the charging pile system further includes: when one second charging unit fails simultaneously with a corresponding first charging unit and a corresponding charging management unit in the charging pile system, generating, by the second charging unit where a communication fault occurs, first target route information based on the charging control information to be transmitted, the first target route information including the destination address information and fault request information, and the fault request information being address information corresponding to the second charging unit where the communication fault occurs; and transmitting, by a normal second charging unit, the first target route information to the target vehicle through the second communication connection and the first communication connection, transmitting, by the target vehicle, the first target route information to a corresponding first charging unit corresponding to the destination address information through the plurality of charging management units, and completing, by the first charging unit, the charging operation on the target vehicle based on the charging control information in the first target route information.

Further, the process of charging the target vehicle by the charging pile system further includes: transmitting the first target route information to the pile cloud platform through the target vehicle, the second communication connection, and the first communication connection, and performing fault communication positioning by the pile cloud platform.

Further, the process of charging the target vehicle by the charging pile system further includes: generating, by a first charging unit in the charging pile system, second route information based on the charging control information to be transmitted when a communication fault occurs between the charging pile system and the pile cloud platform, the second route information including charging pile charging monitoring information and charging pile charging state information; transmitting the second route information to the pile cloud platform through the target vehicle, the first communication connection, and the second communication connection, and generating, by the pile cloud platform, charging authorization information based on the second route information; and transmitting the charging authorization information to the target vehicle through the first communication connection and the second communication connection, transmitting, by the target vehicle, the charging authorization information to the charging pile system through the plurality of charging management units, and completing the charging operation on the target vehicle by the charging pile system.

In this embodiment of the present disclosure, the first charging unit is a station monitoring unit (SMU), and the second charging unit is a power management unit (PMU). The station monitoring unit mainly performs management of the entire station (such as charging scheduling, service settlement, and environment detection control of the station). The power management unit mainly achieves functions of power management, thermal management, electrical monitoring, environmental monitoring, power distribution, energy control, and the like. A charging management unit (CMU) mainly achieves functions of vehicle communication, charging control, liquid cooling gun cooling system control, man-machine interaction control, and the like.

In the charging control system, the pile cloud platform is further connected to the charging APP, and the vehicle cloud platform is connected to the vehicle APP. The charging APP is used for displaying vehicle pile information of the pile cloud platform, and the vehicle APP is used for displaying charging information of the vehicle cloud platform. In the whole Internet of Vehicles charging system, the annular vehicle charging system is formed by the pile cloud platform, the vehicle cloud platform, the charging pile system, and the vehicle. When a communication outage occurs in the charging pile system or the charging pile system loses communication with the pile cloud platform, charging of the target vehicle by the charging pile is not affected, which enhances stability and reliability of the charging system.

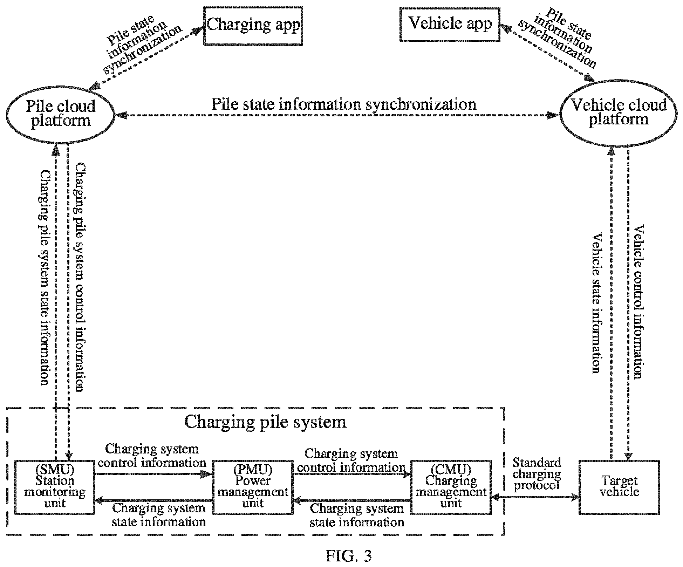

FIG. 3 is a schematic diagram of an information flow during normal operation of a charging pile according to an embodiment of the present disclosure. When the interior of charging pile system, the charging pile system, and the pile cloud platform are all communicated normally, the pile cloud platform transmits normal charging control information to the station monitoring unit in the charging pile system, the station monitoring unit collects the charging control information and reports information of the charging pile system to the pile cloud platform in real-time to realize information interaction between the charging pile system and the pile cloud platform, and the charging control information is interacted with vehicle-pile charging timing sequence of the target vehicle by the charging management unit through a standard charging protocol. The charging state information of the target vehicle is transmitted to the vehicle cloud platform by the target vehicle. The vehicle cloud platform and the pile cloud platform synchronize the vehicle pile state information based on the vehicle charging demand. Moreover, the charging APP connected to the pile cloud platform and the vehicle APP connected to the vehicle cloud platform display the charging state information and other information. The charging operation on the target vehicle is achieved by the units of the charging pile system based on the charging control information in the charging information interaction.

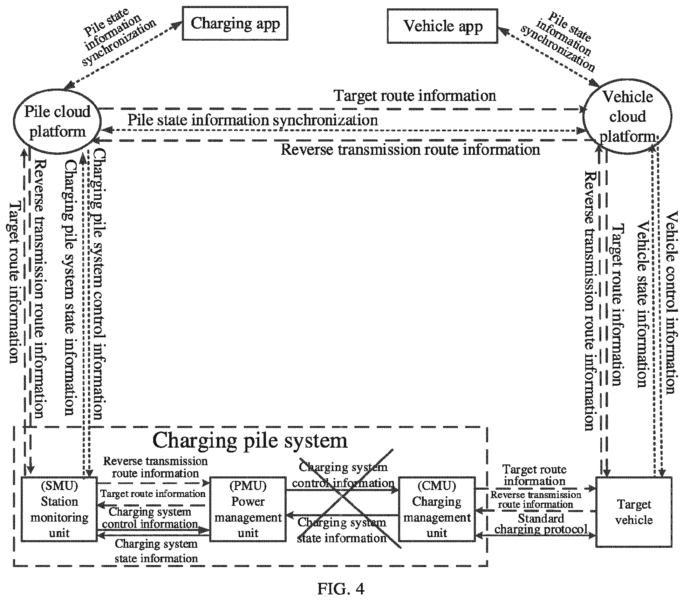

As an example of the communication outage in the charging pile system, a communication fault occurs between the second charging unit and the charging management unit. FIG. 4 is a schematic diagram of an information flow when a communication fault occurs between a power management unit and a charging management unit in a charging pile system according to an embodiment of the present disclosure. In FIG. 4, the target route information is generated based on the information to be transmitted by the power management unit to the charging management unit. The target route information in the drawings refers to the route information transmitted by the power management unit to the charging management unit, and the reverse transmission route information refers to the route information to be transmitted by the charging management unit to the power management unit. In addition, normal information interaction is also performed while the route information is transmitted, and the charging operation on the target vehicle is completed by the units of the charging pile system based on the charging control information in the target route information. The content contained in the target route information is illustrated in the following table:

| Information format | The information format may be selected as: normal information/clockwise route/counterclockwise route/requesting bypass route (e.g., PMU-A requests PMU-B to perform bypass information route) |
|---|---|
| Destination address | An address of a target ECU that the route information needs to reach. |
| Source address | An address of the ECU first initiating the route information |
| Information length | A total length of information requiring the route (unit: byte) |
| Route information | Information needs to be routed (which is mainly interaction information or control information required for normal charging) |

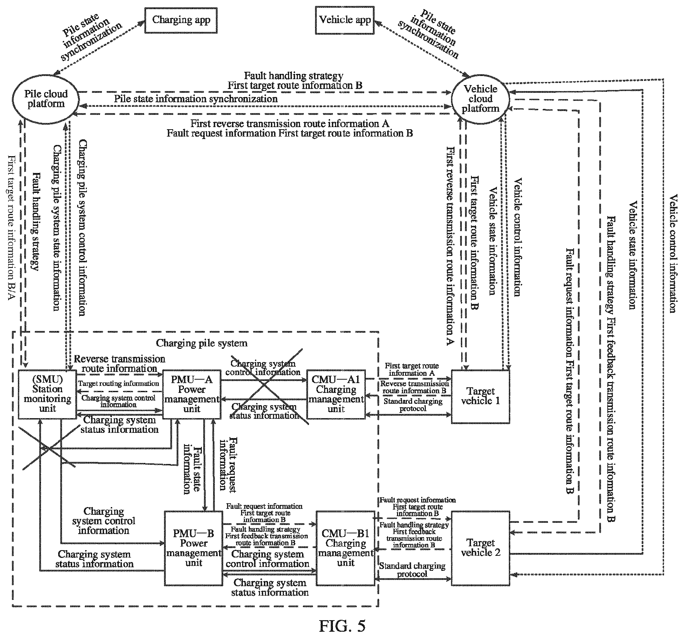

The charging pile system includes the plurality of parallel second charging units and the plurality of parallel charging management units, and one second charging unit fails simultaneously with the corresponding first charging unit and the corresponding charging management unit in the charging pile system. For example, FIG. 5 is a schematic diagram of a communication information flow when a power management unit (PMU-A) fails simultaneously with a station monitoring unit and a charging management unit according to an embodiment of the present disclosure. In FIG. 5, the first target route information is generated based on the information to be transmitted by the PMU-A. The first target route information includes the fault request information. The fault request information of the first target route information is transmitted to the pile cloud platform through the PMU-B, the pile cloud platform positions the faulty second charging unit, and information interaction of the PMU-B is consistent with information interaction thereof in FIG. 4.

In FIG. 5, since the power management unit (PMU-A) fails simultaneously with the station monitoring unit and the charging management unit, the charging management unit (CMU-A1) also generates the route information based on the information to be transmitted, thereby completing the interaction of the charging control information. However, at this time, the target vehicle 1 is in an uncharged state due to the loss of the control of the power management unit on the charging information.

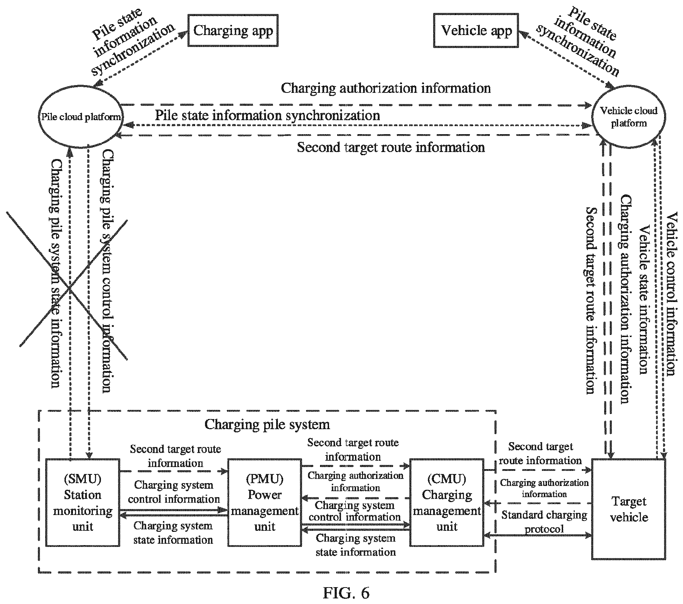

When the communication fault occurs between the charging pile system and the pile cloud platform, FIG. 6 is a schematic diagram of an information flow when a communication fault occurs between a pile cloud platform and a charging pile system according to an embodiment of the present disclosure. The station monitoring unit in the charging pile system packages the information to be transmitted into the second target route information, and transmits the second target route information to the pile cloud platform through the target vehicle, the first communication connection, and the second communication connection. The charging authorization information is generated by the pile cloud platform based on the second target route information. The charging authorization information is transmitted by the pile cloud platform to the target vehicle through the first communication connection and the second communication connection. The charging authorization information is transmitted by the target vehicle to the charging pile system through the charging management unit. Therefore, the charging operation on the target vehicle is completed by the charging pile system.

According to embodiments of the present disclosure, by establishing the communication connection with the target vehicle through the charging management unit in the charging pile system, when the communication fault occurs in the charging pile system, the target route information is generated by the first charging unit where the communication fault occurs based on the charging control information to be transmitted. The target route information includes the destination address information, and the destination address information is the address information corresponding to the second charging unit that receives the charging control information to be transmitted. The target route information is transmitted to the target vehicle through the first communication connection and the second communication connection, and is transmitted by the target vehicle to the second charging unit corresponding to the destination address information, enabling the second charging unit to complete the charging operation on the target vehicle based on the charging control information in the target route information. According to the technical solution, when the communication fault occurs in the charging unit, the charging process of the vehicle may also be completed. Moreover, it is possible to improve reliability and robustness of the charging system and accurate positioning of a fault point.

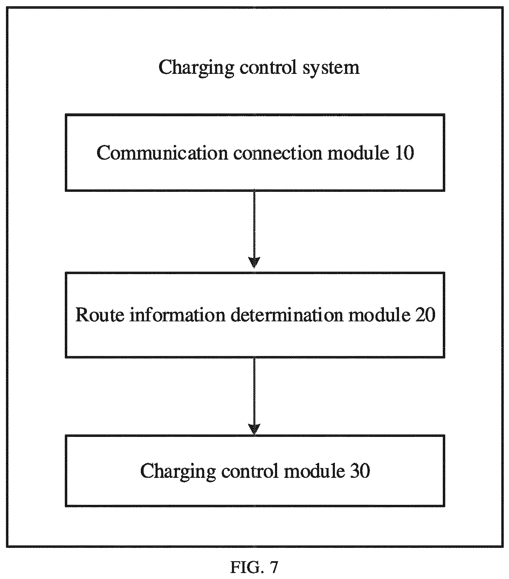

The embodiments of the present disclosure further provide a charging control system. The charging control system includes: a pile cloud platform, a charging pile system, and a vehicle cloud platform interacting with the pile cloud platform through a first communication connection. FIG. 7 is a schematic diagram of a charging control system according to an embodiment of the present disclosure, which specifically includes: a communication connection module 10 configured to establish a communication connection with a target vehicle through the charging pile system in a process of charging the target vehicle by the charging pile system, the target vehicle interacting with the vehicle cloud platform through a second communication connection; a route information determination module 20 configured to, when a communication fault occurs in the charging pile system, generate, based on charging control information to be transmitted, target route information by a first charging unit where the communication fault occurs, the target route information including destination address information, and the destination address information being address information corresponding to a second charging unit that receives the charging control information to be transmitted; and a charging control module 30 configured to transmit the target route information to the target vehicle through the first communication connection and the second communication connection, and complete, by the target vehicle, a charging operation on the target vehicle based on the charging control information in the target route information received by the charging pile system.

Further, the charging control module 30 further includes: a reverse transmission route module configured to transmit, by the target vehicle, reverse transmission route information of the target route information received by the first charging unit to the first charging unit through the first communication connection and the second communication connection. The reverse route information process is used for performing information interaction.

Further, the charging pile system includes a plurality of parallel second charging units and a plurality of parallel charging management units; and the process of charging the target vehicle by the charging pile system further includes: a first target route information determination module configured to when one second charging unit fails simultaneously with a corresponding first charging unit and a corresponding charging management unit in the charging pile system, generate, by the second charging unit where a communication fault occurs, first target route information based on the charging control information to be transmitted, the first target route information including the destination address information and fault request information, and the fault request information being address information corresponding to the second charging unit where the communication fault occurs; and a first charging control module configured to transmit, by a normal second charging unit, the first target route information to the target vehicle through the second communication connection and the first communication connection, transmitting, by the target vehicle, the first target route information to a first charging unit corresponding to the destination address information through the plurality of charging management units, and completing, by the first charging unit, the charging operation on the target vehicle based on charging control information in the first target route information.

Further, the process of charging the target vehicle by the charging pile system further includes: a fault positioning module configured to transmit the first target route information to the pile cloud platform through the target vehicle, the second communication connection, and the first communication connection, and perform fault communication positioning by the pile cloud platform.

Further, the process of charging the target vehicle by the charging pile system further includes: a second route information determination module configured to generate, by a first charging unit in the charging pile system, second route information based on the charging control information to be transmitted when a communication fault occurs between the charging pile system and the pile cloud platform, the second route information including charging pile charging monitoring information and charging pile charging state information; a charging authorization information module configured to transmit the second route information to the pile cloud platform through the target vehicle, the first communication connection, and the second communication connection, and generating, by the pile cloud platform, charging authorization information based on the second route information; and a second charging control module configured to transmit the charging authorization information to the target vehicle through the first communication connection and the second communication connection, transmitting, by the target vehicle, the charging authorization information to the charging pile system through the plurality of charging management units, and completing the charging operation on the target vehicle by the charging pile system.

Regarding the system according to any of the above embodiments, a specific manner in which each module performs operations has been described in detail in the embodiments of the method, and detailed description will be omitted here.

The embodiments of the present disclosure further provide a storage medium, when loaded and executed, implementing the charging control method as described above.

While the specific embodiments of the present disclosure have been described above, the protect scope of the present disclosure is not limited to these embodiments. Various variants and alternatives can be easily conceived by any of those skilled in the art without departing from the technical scope of the present disclosure. Therefore, these variants and alternatives are to be encompassed by the protect scope of present disclosure as defined by the claims as attached.

## Claims

1. A charging control method, applied to an annular charging control system comprising a pile cloud platform, a charging pile system, and a vehicle cloud platform interacting with the pile cloud platform through a first communication connection, wherein the charging pile system includes a plurality of charging units comprising a first charging unit and a second charging unit, the method comprising, in a process of charging a target vehicle by the charging pile system:
establishing (S201) a communication connection with the target vehicle through the charging pile system, the target vehicle interacting with the vehicle cloud platform through a second communication connection;
when a communication fault occurs in the charging pile system, generating (S202), based on charging control information to be transmitted, target route information by the first charging unit where the communication fault occurs, the target route information comprising destination address information, and the destination address information being address information corresponding to the second charging unit that receives the charging control information to be transmitted; and
transmitting (S203) the target route information from the first charging unit to the target vehicle through the pile cloud platform, the first communication connection and the second communication connection, and transmitting, by the target vehicle, the target route information to the second charging unit corresponding to the destination address information, thus enabling the second charging unit to complete the charging operation on the target vehicle based on the charging control information in the target route information.

2. The charging control method according to claim 1, wherein said transmitting the target route information to the target vehicle through the first communication connection and the second communication connection further comprises:
transmitting, by the target vehicle, reverse transmission route information of the target route information received by the first charging unit to the first charging unit through the first communication connection and the second communication connection, the reverse route information process being used for performing information interaction.

3. The charging control method according to claim 1, wherein
the charging pile system comprises a plurality of parallel second charging units and a plurality of parallel charging management units; and
the process of charging the target vehicle by the charging pile system further comprises:
when one of the plurality of parallel second charging units fails simultaneously with a corresponding first charging unit and a corresponding charging management unit in the charging pile system, generating, by the second charging unit where a communication fault occurs, first target route information based on the charging control information to be transmitted, the first target route information comprising the destination address information and fault request information, and the fault request information being address information corresponding to the second charging unit where the communication fault occurs; and
transmitting, by a normal second charging unit, the first target route information to the target vehicle through the second communication connection and the first communication connection, transmitting, by the target vehicle, the first target route information to a first charging unit corresponding to the destination address information through the plurality of charging management units, and completing, by the first charging unit, the charging operation on the target vehicle based on the charging control information in the first target route information.

4. The charging control method according to claim 3, wherein the process of charging the target vehicle by the charging pile system further comprises:
transmitting the first target route information to the pile cloud platform through the target vehicle, the second communication connection, and the first communication connection, and performing fault communication positioning by the pile cloud platform.

5. The charging control method according to claim 3, wherein the process of charging the target vehicle by the charging pile system further comprises:
generating, by a first charging unit in the charging pile system, second route information based on the charging control information to be transmitted when a communication fault occurs between the charging pile system and the pile cloud platform, the second route information comprising charging pile charging monitoring information and charging pile charging state information;
transmitting the second route information to the pile cloud platform through the target vehicle, the first communication connection, and the second communication connection, and generating, by the pile cloud platform, charging authorization information based on the second route information; and
transmitting the charging authorization information to the target vehicle through the first communication connection and the second communication connection, transmitting, by the target vehicle, the charging authorization information to the charging pile system through the plurality of charging management units, and completing the charging operation on the target vehicle by the charging pile system.

6. An annular charging control system, comprising:
a pile cloud platform;
a charging pile system including a plurality of charging units comprising a first charging unit and a second charging unit;
a vehicle cloud platform interacting with the pile cloud platform through a first communication connection;
a communication connection module (10) configured to establish a communication connection with a target vehicle through the charging pile system in a process of charging the target vehicle by the charging pile system, the target vehicle interacting with the vehicle cloud platform through a second communication connection;
a route information determination module (20) configured to, when a communication fault occurs in the charging pile system, generate, based on charging control information to be transmitted, target route information by the first charging unit where the communication fault occurs, the target route information comprising destination address information, and the destination address information being address information corresponding to the second charging unit that receives the charging control information to be transmitted; and
a charging control module (30) configured to transmit the target route information from the first charging unit to the target vehicle through the pile cloud platform, the first communication connection and the second communication connection, and transmit, by the target vehicle, the target route information to the second charging unit corresponding to the destination address information, thus enabling the second charging unit to complete the charging operation on the target vehicle based on the charging control information in the target route information.

7. The annular charging control system according to claim 6, wherein the charging control module (30) further comprises:
a reverse transmission route module configured to transmit, by the target vehicle, reverse transmission route information of the target route information received by the first charging unit to the first charging unit through the first communication connection and the second communication connection, the reverse route information process being used for performing information interaction.

8. The annular charging control system according to claim 6, wherein
the charging pile system comprises a plurality of parallel second charging units and a plurality of parallel charging management units; and
the process of charging the target vehicle by the charging pile system further comprises:
a first target route information determination module configured to when one of the plurality of parallel second charging units fails simultaneously with a corresponding first charging unit and a corresponding charging management unit in the charging pile system, generate, by the second charging unit where a communication fault occurs, first target route information based on the charging control information to be transmitted, the first target route information comprising the destination address information and fault request information, and the fault request information being address information corresponding to the second charging unit where the communication fault occurs; and
a first charging control module configured to transmit, by a normal second charging unit, the first target route information to the target vehicle through the second communication connection and the first communication connection, transmitting, by the target vehicle, the first target route information to a first charging unit corresponding to the destination address information through the plurality of charging management units, and completing, by the first charging unit, the charging operation on the target vehicle based on charging control information in the first target route information.

9. The annular charging control system according to claim 6, wherein the process of charging the target vehicle by the charging pile system further comprises:
a second route information determination module configured to generate, by a first charging unit in the charging pile system, second route information based on the charging control information to be transmitted when a communication fault occurs between the charging pile system and the pile cloud platform, the second route information comprising charging pile charging monitoring information and charging pile charging state information;
a charging authorization information module configured to transmit the second route information to the pile cloud platform through the target vehicle, the first communication connection, and the second communication connection, and generating, by the pile cloud platform, charging authorization information based on the second route information; and
a second charging control module configured to transmit the charging authorization information to the target vehicle through the first communication connection and the second communication connection, transmitting, by the target vehicle, the charging authorization information to the charging pile system through the plurality of charging management units, and completing the charging operation on the target vehicle by the charging pile system.

10. A storage medium, when executed, implementing the charging control method according to any one of claims 1 to 5.

## Patentansprüche

1. Verfahren zur Ladesteuerung, das in einem ringförmigen System zur Ladesteuerung angewendet wird, das eine Säulen-Cloud-Plattform, ein Ladesäulensystem und eine Fahrzeug-Cloud-Plattform umfasst, die mit der Säulen-Cloud-Plattform über eine erste Kommunikationsverbindung interagiert, wobei das Ladesäulensystem mehrere Ladeeinheiten umfasst, die eine erste Ladeeinheit und eine zweite Ladeeinheit umfassen, wobei das Verfahren in einem Prozess des Ladens eines Zielfahrzeugs durch das Ladesäulensystem Folgendes umfasst:
Herstellen (S201) einer Kommunikationsverbindung mit dem Zielfahrzeug über das Ladesäulensystem, wobei das Zielfahrzeug mit der Fahrzeug-Cloud-Plattform über eine zweite Kommunikationsverbindung interagiert;
wenn ein Kommunikationsfehler in dem Ladesäulensystem auftritt, Erzeugen (S202), auf der Grundlage der zu übertragenden Ladesteuerungsinformationen, der Zielrouteninformationen durch die erste Ladeeinheit, in der der Kommunikationsfehler auftritt, wobei die Zielrouteninformationen Bestimmungsort-Adresseninformationen umfassen und die Bestimmungsort-Adresseninformationen Adressinformationen sind, die der zweiten Ladeeinheit entsprechen, die die zu übertragenden Ladesteuerungsinformationen empfängt; und
Übertragen (S203) der Zielrouteninformationen von der ersten Ladeeinheit an das Zielfahrzeug über die Säulen-Cloud-Plattform, die erste Kommunikationsverbindung und die zweite Kommunikationsverbindung und Übertragen, durch das Zielfahrzeug, der Zielrouteninformationen an die zweite Ladeeinheit entsprechend den Bestimmungsort-Adresseninformationen, wodurch die zweite Ladeeinheit in die Lage versetzt wird, den Ladevorgang an dem Zielfahrzeug auf der Grundlage der Ladesteuerungsinformationen in den Zielrouteninformationen abzuschließen.

2. Verfahren zur Ladesteuerung nach Anspruch 1, wobei das Übertragen der Zielrouteninformationen über die erste Kommunikationsverbindung und die zweite Kommunikationsverbindung an das Zielfahrzeug ferner Folgendes umfasst:
Übertragen, durch das Zielfahrzeug, der Rückwärtsübertragungsrouteninformationen der von der ersten Ladeeinheit empfangenen Zielrouteninformationen über die erste Kommunikationsverbindung und die zweite Kommunikationsverbindung an die erste Ladeeinheit, wobei der Rückwärtsrouteninformationsprozess zur Durchführung einer Informationsinteraktion verwendet wird.

3. Verfahren zur Ladesteuerung nach Anspruch 1, wobei
das Ladesäulensystem mehrere parallele zweite Ladeeinheiten und mehrere parallele Ladeverwaltungseinheiten umfasst; und
der Prozess des Ladens des Zielfahrzeugs durch das Ladesäulensystem ferner Folgendes umfasst:
wenn eine der mehreren parallelen zweiten Ladeeinheiten gleichzeitig mit einer entsprechenden ersten Ladeeinheit und einer entsprechenden Ladeverwaltungseinheit im Ladesäulensystem ausfällt, Erzeugen, durch die zweite Ladeeinheit, in der ein Kommunikationsfehler auftritt, der ersten Zielrouteninformationen auf der Grundlage der zu übertragenden Ladesteuerungsinformationen, wobei die ersten Zielrouteninformationen die Bestimmungsort-Adresseninformationen und Fehleranforderungsinformationen umfassen und die Fehleranforderungsinformationen Adressinformationen sind, die der zweiten Ladeeinheit entsprechen, in der der Kommunikationsfehler auftritt; und
Übertragen, durch eine normale zweite Ladeeinheit, der ersten Zielrouteninformationen über die zweite Kommunikationsverbindung und die erste Kommunikationsverbindung an das Zielfahrzeug, Übertragen, durch das Zielfahrzeug, der ersten Zielrouteninformationen über die mehreren Ladeverwaltungseinheiten an eine erste Ladeeinheit entsprechend den Bestimmungsort-Adresseninformationen und Abschließen, durch die erste Ladeeinheit, des Ladevorgangs an dem Zielfahrzeug auf der Grundlage der Ladesteuerungsinformationen in den ersten Zielrouteninformationen.

4. Verfahren zur Ladesteuerung nach Anspruch 3, wobei der Prozess des Ladens des Zielfahrzeugs durch das Ladesäulensystem ferner Folgendes umfasst:
Übertragen der ersten Zielrouteninformationen an die Säulen-Cloud-Plattform über das Zielfahrzeug, die zweite Kommunikationsverbindung und die erste Kommunikationsverbindung, und Durchführen einer Fehlerkommunikationspositionierung durch die Säulen-Cloud-Plattform.

5. Verfahren zur Ladesteuerung nach Anspruch 3, wobei der Prozess des Ladens des Zielfahrzeugs durch das Ladesäulensystem ferner Folgendes umfasst:
Erzeugen, durch eine erste Ladeeinheit in dem Ladesäulensystem, der zweiten Routeninformationen auf der Grundlage der zu übertragenden Ladesteuerungsinformationen, wenn ein Kommunikationsfehler zwischen dem Ladesäulensystem und der Säulen-Cloud-Plattform auftritt, wobei die zweiten Routeninformationen Ladesäulen-Ladeüberwachungsinformationen und Ladesäulen-Ladezustandsinformationen umfassen;
Übertragen der zweiten Routeninformationen an die Säulen-Cloud-Plattform über das Zielfahrzeug, die erste Kommunikationsverbindung und die zweite Kommunikationsverbindung, und Erzeugen, durch die Säulen-Cloud-Plattform, der Ladeberechtigungsinformationen auf der Grundlage der zweiten Routeninformationen; und
Übertragen der Ladeberechtigungsinformationen an das Zielfahrzeug über die erste Kommunikationsverbindung und die zweite Kommunikationsverbindung, Übertragen, durch das Zielfahrzeug, der Ladeberechtigungsinformationen an das Ladesäulensystem über die mehreren Ladeverwaltungseinheiten und Abschließen des Ladevorgangs an dem Zielfahrzeug durch das Ladesäulensystem.

6. Ringförmiges System zur Ladesteuerung, das Folgendes umfasst:
eine Säulen-Cloud-Plattform;
ein Ladesäulensystem mit mehreren Ladeeinheiten, die eine erste Ladeeinheit und eine zweite Ladeeinheit umfassen;
eine Fahrzeug-Cloud-Plattform, die über eine erste Kommunikationsverbindung mit der Säulen-Cloud-Plattform interagiert;
ein Kommunikationsverbindungsmodul (10), das so konfiguriert ist, dass es eine Kommunikationsverbindung mit einem Zielfahrzeug über das Ladesäulensystem in einem Prozess des Ladens des Zielfahrzeugs durch das Ladesäulensystem herstellt, wobei das Zielfahrzeug mit der Fahrzeug-Cloud-Plattform über eine zweite Kommunikationsverbindung interagiert;
ein Routeninformationsbestimmungsmodul (20), das so konfiguriert ist, dass es, wenn ein Kommunikationsfehler in dem Ladesäulensystem auftritt, auf der Grundlage der zu übertragenden Ladesteuerungsinformationen Zielrouteninformationen durch die erste Ladeeinheit, in der der Kommunikationsfehler auftritt, erzeugt, wobei die Zielrouteninformationen Bestimmungsort-Adresseninformationen umfassen und die Bestimmungsort-Adresseninformationen Adressinformationen sind, die der zweiten Ladeeinheit entsprechen, die die zu übertragenden Ladesteuerungsinformationen empfängt; und
ein Ladesteuerungsmodul (30), das so konfiguriert ist, dass es die Zielrouteninformationen von der ersten Ladeeinheit über die Säulen-Cloud-Plattform, die erste Kommunikationsverbindung und die zweite Kommunikationsverbindung an das Zielfahrzeug überträgt und durch das Zielfahrzeug die Zielrouteninformationen an die zweite Ladeeinheit entsprechend den Bestimmungsort-Adresseninformationen überträgt, wodurch die zweite Ladeeinheit in die Lage versetzt wird, den Ladevorgang an dem Zielfahrzeug auf der Grundlage der Ladesteuerungsinformationen in den Zielrouteninformationen abzuschließen.

7. Ringförmiges System zur Ladesteuerung nach Anspruch 6, wobei das Ladesteuerungsmodul (30) ferner Folgendes umfasst:
ein Rückwärtsübertragungsroutenmodul, das so konfiguriert ist, dass es durch das Zielfahrzeug Rückwärtsübertragungsrouteninformationen der von der ersten Ladeeinheit empfangenen Zielrouteninformationen über die erste Kommunikationsverbindung und die zweite Kommunikationsverbindung an die erste Ladeeinheit überträgt, wobei der Rückwärtsrouteninformationsprozess zur Durchführung einer Informationsinteraktion verwendet wird.

8. Ringförmiges System zur Ladesteuerung nach Anspruch 6, wobei
das Ladesäulensystem mehrere parallele zweite Ladeeinheiten und mehrere parallele Ladeverwaltungseinheiten umfasst; und
der Prozess des Ladens des Zielfahrzeugs durch das Ladesäulensystem ferner Folgendes umfasst:
ein erstes Zielrouteninformationsbestimmungsmodul, das so konfiguriert ist, dass es, wenn eine der mehreren parallelen zweiten Ladeeinheiten gleichzeitig mit einer entsprechenden ersten Ladeeinheit und einer entsprechenden Ladeverwaltungseinheit im Ladesäulensystem ausfällt, durch die zweite Ladeeinheit, in der ein Kommunikationsfehler auftritt, der ersten Zielrouteninformationen auf der Grundlage der zu übertragenden Ladesteuerungsinformationen erzeugt, wobei die ersten Zielrouteninformationen die Bestimmungsort-Adresseninformationen und Fehleranforderungsinformationen umfassen und die Fehleranforderungsinformationen Adressinformationen sind, die der zweiten Ladeeinheit entsprechen, in der der Kommunikationsfehler auftritt; und
ein erstes Ladesteuerungsmodul, das so konfiguriert ist, dass es durch eine normale zweite Ladeeinheit die ersten Zielrouteninformationen über die zweite Kommunikationsverbindung und die erste Kommunikationsverbindung an das Zielfahrzeug überträgt, durch das Zielfahrzeug die ersten Zielrouteninformationen über die mehreren Ladesteuerungseinheiten an eine erste Ladeeinheit entsprechend den Bestimmungsort-Adresseninformationen überträgt, und durch die erste Ladeeinheit den Ladevorgang an dem Zielfahrzeug auf der Grundlage der Ladesteuerungsinformationen in den ersten Zielrouteninformationen abschließt.

9. Ringförmiges System zur Ladesteuerung nach Anspruch 6, wobei der Prozess des Ladens des Zielfahrzeugs durch das Ladesäulensystem ferner Folgendes umfasst:
ein zweites Routeninformationsbestimmungsmodul, das so konfiguriert ist, dass es durch eine erste Ladeeinheit in dem Ladesäulensystem die zweiten Routeninformationen auf der Grundlage der zu übertragenden Ladesteuerungsinformationen erzeugt, wenn ein Kommunikationsfehler zwischen dem Ladesäulensystem und der Säulen-Cloud-Plattform auftritt, wobei die zweiten Routeninformationen Ladesäulen-Ladeüberwachungsinformationen und Ladesäulen-Ladezustandsinformationen umfassen;
ein Ladeberechtigungsinformationsmodul, das so konfiguriert ist, dass es die zweiten Routeninformationen an die Säulen-Cloud-Plattform über das Zielfahrzeug, die erste Kommunikationsverbindung und die zweite Kommunikationsverbindung überträgt, und durch die Säulen-Cloud-Plattform die Ladeberechtigungsinformationen auf der Grundlage der zweiten Routeninformationen erzeugt; und
ein zweites Ladesteuerungsmodul, das so konfiguriert ist, dass es die Ladeberechtigungsinformationen an das Zielfahrzeug über die erste Kommunikationsverbindung und die zweite Kommunikationsverbindung überträgt, durch das Zielfahrzeug die Ladeberechtigungsinformationen an das Ladesäulensystem über die mehreren Ladeverwaltungseinheiten überträgt und den Ladevorgang an dem Zielfahrzeug durch das Ladesäulensystem abschließt.

10. Speichermedium, das, wenn es ausgeführt wird, das Verfahren zur Ladesteuerung nach einem der Ansprüche 1 bis 5 implementiert.

## Revendications

1. Un procédé de contrôle de charge, appliqué à un système de contrôle de charge annulaire comprenant une plateforme nuage de borne, un système de borne de charge et une plateforme nuage de véhicule interagissant avec la plateforme nuage de borne via une première connexion de communication, le système de borne de charge incluant une pluralité d'unités de charge comprenant une première unité de charge et une deuxième unité de charge, le procédé comprenant, lors du processus de charge d'un véhicule cible par le système de borne de charge :
établir (S201) une connexion de communication avec le véhicule cible via le système de borne de charge, le véhicule cible interagissant avec la plateforme nuage de véhicule via une deuxième connexion de communication ;
lorsqu'une panne de communication se produit dans le système de borne de charge, générer (S202), à partir des informations de contrôle de charge à transmettre, des informations de route cible par la première unité de charge où se produit la panne de communication, les informations de route cible comprenant des informations d'adresse de destination, et les informations d'adresse de destination étant des informations d'adresse correspondant à la deuxième unité de charge qui reçoit les informations de contrôle de charge à transmettre ; et
transmettre (S203) les informations de route cible de la première unité de charge au véhicule cible via la plateforme nuage de borne, la première connexion de communication et la deuxième connexion de communication, et faire transmettre par le véhicule cible les informations de route cible à la deuxième unité de charge correspondant aux informations d'adresse de destination, permettant ainsi à la deuxième unité de charge de terminer l'opération de charge sur le véhicule cible d'après les informations de contrôle de charge contenues dans les informations de route cible.

2. Le procédé de contrôle de charge selon la revendication 1, **caractérisé en ce que** ladite transmission des informations de route cible au véhicule cible via la première connexion de communication et la deuxième connexion de communication comprend en outre :
faire transmettre par le véhicule cible des informations de route de transmission inverse des informations de route cible reçues par la première unité de charge à la première unité de charge via la première connexion de communication et la deuxième connexion de communication, le processus d'informations de route inverse étant utilisé pour effectuer une interaction d'informations.

3. Le procédé de contrôle de charge selon la revendication 1, **caractérisé en ce que** :
le système de borne de charge comprend une pluralité de deuxièmes unités de charge en parallèle et une pluralité d'unités de gestion de charge en parallèle ; et
le processus de charge du véhicule cible par le système de borne de charge comprend en outre :
lorsqu'une des pluralités de deuxièmes unités de charge en parallèle tombe en panne simultanément avec une première unité de charge correspondante et une unité de gestion de charge correspondante dans le système de borne de charge, faire générer par la deuxième unité de charge où se produit la panne de communication des premières informations de route cible d'après les informations de contrôle de charge à transmettre, les premières informations de route cible comprenant les informations d'adresse de destination et des informations de demande de panne, et les informations de demande de panne étant des informations d'adresse correspondant à la deuxième unité de charge où se produit la panne de communication ; et
faire transmettre par une deuxième unité de charge fonctionnelle les premières informations de route cible au véhicule cible via la deuxième connexion de communication et la première connexion de communication, faire transmettre par le véhicule cible les premières informations de route cible à une première unité de charge correspondant aux informations d'adresse de destination via la pluralité d'unités de gestion de charge, et faire terminer par la première unité de charge l'opération de charge sur le véhicule cible d'après les informations de contrôle de charge contenues dans les premières informations de route cible.

4. Le procédé de contrôle de charge selon la revendication 3, **caractérisé en ce que** le processus de charge du véhicule cible par le système de borne de charge comprend en outre :
transmettre les premières informations de route cible à la plateforme nuage de borne via le véhicule cible, la deuxième connexion de communication et la première connexion de communication, et faire effectuer par la plateforme nuage de borne un positionnement de communication de panne.

5. Le procédé de contrôle de charge selon la revendication 3, **caractérisé en ce que** le processus de charge du véhicule cible par le système de borne de charge comprend en outre :
faire générer par une première unité de charge dans le système de borne de charge des deuxièmes informations de route d'après les informations de contrôle de charge à transmettre lorsqu'une panne de communication se produit entre le système de borne de charge et la plateforme nuage de borne, les deuxièmes informations de route comprenant des informations de surveillance de charge de la borne et des informations d'état de charge de la borne ;
transmettre les deuxièmes informations de route à la plateforme nuage de borne via le véhicule cible, la première connexion de communication et la deuxième connexion de communication, et faire générer par la plateforme nuage de borne des informations d'autorisation de charge d'après les deuxièmes informations de route ; et
transmettre les informations d'autorisation de charge au véhicule cible via la première connexion de communication et la deuxième connexion de communication, faire transmettre par le véhicule cible les informations d'autorisation de charge au système de borne de charge via la pluralité d'unités de gestion de charge, et faire terminer par le système de borne de charge l'opération de charge sur le véhicule cible.

6. Un système de contrôle de charge annulaire, comprenant :
une plateforme nuage de borne ;
un système de borne de charge incluant une pluralité d'unités de charge comprenant une première unité de charge et une deuxième unité de charge ;
une plateforme nuage de véhicule interagissant avec la plateforme nuage de borne via une première connexion de communication ;
un module de connexion de communication (10) configuré pour établir une connexion de communication avec un véhicule cible via le système de borne de charge lors du processus de charge du véhicule cible par le système de borne de charge, le véhicule cible interagissant avec la plateforme nuage de véhicule via une deuxième connexion de communication ;
un module de détermination d'informations de route (20) configuré pour, lorsqu'une panne de communication se produit dans le système de borne de charge, faire générer par la première unité de charge où se produit la panne de communication des informations de route cible d'après les informations de contrôle de charge à transmettre, les informations de route cible comprenant des informations d'adresse de destination, et les informations d'adresse de destination étant des informations d'adresse correspondant à la deuxième unité de charge qui reçoit les informations de contrôle de charge à transmettre ; et
un module de contrôle de charge (30) configuré pour transmettre les informations de route cible de la première unité de charge au véhicule cible via la plateforme nuage de borne, la première connexion de communication et la deuxième connexion de communication, et faire transmettre par le véhicule cible les informations de route cible à la deuxième unité de charge correspondant aux informations d'adresse de destination, permettant ainsi à la deuxième unité de charge de terminer l'opération de charge sur le véhicule cible d'après les informations de contrôle de charge contenues dans les informations de route cible.

7. Le système de contrôle de charge annulaire selon la revendication 6, **caractérisé en ce que** le module de contrôle de charge (30) comprend en outre :
un module de route de transmission inverse configuré pour faire transmettre par le véhicule cible des informations de route de transmission inverse des informations de route cible reçues par la première unité de charge à la première unité de charge via la première connexion de communication et la deuxième connexion de communication, le processus d'informations de route inverse étant utilisé pour effectuer une interaction d'informations.

8. Le système de contrôle de charge annulaire selon la revendication 6, **caractérisé en ce que** :
le système de borne de charge comprend une pluralité de deuxièmes unités de charge en parallèle et une pluralité d'unités de gestion de charge en parallèle ; et
le processus de charge du véhicule cible par le système de borne de charge comprend en outre :
un module de détermination de premières informations de route cible configuré pour, lorsqu'une des pluralités de deuxièmes unités de charge en parallèle tombe en panne simultanément avec une première unité de charge correspondante et une unité de gestion de charge correspondante dans le système de borne de charge, faire générer par la deuxième unité de charge où se produit la panne de communication des premières informations de route cible d'après les informations de contrôle de charge à transmettre, les premières informations de route cible comprenant les informations d'adresse de destination et des informations de demande de panne, et les informations de demande de panne étant des informations d'adresse correspondant à la deuxième unité de charge où se produit la panne de communication ; et
un premier module de contrôle de charge configuré pour faire transmettre par une deuxième unité de charge fonctionnelle les premières informations de route cible au véhicule cible via la deuxième connexion de communication et la première connexion de communication, faire transmettre par le véhicule cible les premières informations de route cible à une première unité de charge correspondante aux informations d'adresse de destination via la pluralité d'unités de gestion de charge, et faire terminer par la première unité de charge l'opération de charge sur le véhicule cible d'après les informations de contrôle de charge contenues dans les premières informations de route cible.

9. Le système de contrôle de charge annulaire selon la revendication 6, **caractérisé en ce que** le processus de charge du véhicule cible par le système de borne de charge comprend en outre :
un module de détermination de deuxièmes informations de route configuré pour faire générer par une première unité de charge dans le système de borne de charge des deuxièmes informations de route d'après les informations de contrôle de charge à transmettre lorsqu'une panne de communication se produit entre le système de borne de charge et la plateforme nuage de borne, les deuxièmes informations de route comprenant des informations de surveillance de charge de la borne et des informations d'état de charge de la borne ;
un module d'informations d'autorisation de charge configuré pour transmettre les deuxièmes informations de route à la plateforme nuage de borne via le véhicule cible, la première connexion de communication et la deuxième connexion de communication, et faire générer par la plateforme nuage de borne des informations d'autorisation de charge d'après les deuxièmes informations de route ; et
un deuxième module de contrôle de charge configuré pour transmettre les informations d'autorisation de charge au véhicule cible via la première connexion de communication et la deuxième connexion de communication, faire transmettre par le véhicule cible les informations d'autorisation de charge au système de borne de charge via la pluralité d'unités de gestion de charge, et faire terminer par le système de borne de charge l'opération de charge sur le véhicule cible.

10. Un support de stockage, qui, lors de son exécution, met en œuvre le procédé de contrôle de charge selon l'une quelconque des revendications 1 à 5.
